# EUROPÄISCHE PATENTSCHRIFT

(11) **EP 0 919 597 B1**
(45) Veröffentlichungstag und Bekanntmachung des Hinweises auf die Patenterteilung: **10.10.2001**
(21) Anmeldenummer: 98121755.7
(22) Anmeldetag: 16.11.1998
(51) Int. Cl.: C09B 67/48, C09B 7/00

(54) **Neue Kristallmodifikation von Thiazin-Indigo**
New crystal modification of thiazine-indigo
Nouvelle modification cristalline de thiazine-indigo

(30) Priorität: 25.11.1997 DE 19752092
(43) Veröffentlichungstag der Anmeldung: 02.06.1999
(73) Patentinhaber: Clariant GmbH, 65929 Frankfurt am Main (DE)
(72) Erfinder: Schmidt, Martin Ulrich, Dr., 65931 Frankfurt (DE); Becker, Frank, 63179 Obertshausen (DE); Piastra, Bruno, Dr., 68330 Huningue (FR)

(56) Entgegenhaltungen:
- DE-A- 2 536 120
- FR-A- 2 111 606

## Beschreibung

Die vorliegende Erfindung liegt auf dem Gebiet der heterocyclischen Farbmittel. Die Erfindung betrifft eine neue kristallographische Modifikation (β-Modifikation) einer schwerlöslichen Verbindung der Formel (I)

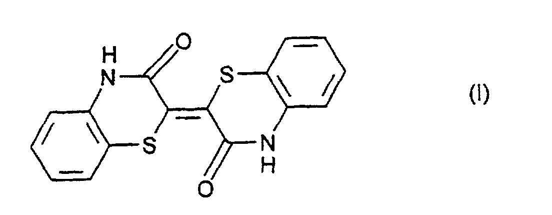

Diese Substanz wird im folgenden als "Thiazin-Indigo" bezeichnet.

Thiazin-Indigo wurde erstmals in der DE-A-21 51 723 beschrieben. Die meisten Synthesen von Thiazin-Indigo gehen von o-Aminothiophenol und einem Maleinsäurederivat aus, wobei als Lösemittel Eisessig (Helv. Chim. Acta 57, 1974, 2664), N-Methylpyrrolidon (DE-A-25 36 120) oder Aceton (T. Teitei, Aust. J. Chem. 39, 503, 1986) eingesetzt werden.

Bestimmte organische Pigmente existieren in mehreren verschiedenen Kristallmodifikationen, auch "polymorphe Formen" genannt. Kristallmodifikationen haben dieselbe chemische Zusammensetzung, aber eine unterschiedliche Anordnung der Moleküle im Kristall. Die Kristallstruktur kann Einfluß auf die chemischen und physikalischen Eigenschaften des Pigments haben, daher unterscheiden sich die einzelnen Kristallmodifikationen oftmals in der Rheologie, der Farbe und anderen coloristischen Eigenschaften. Die unterschiedlichen Kristallmodifikationen werden normalerweise durch Röntgenpulverbeugung identifiziert.

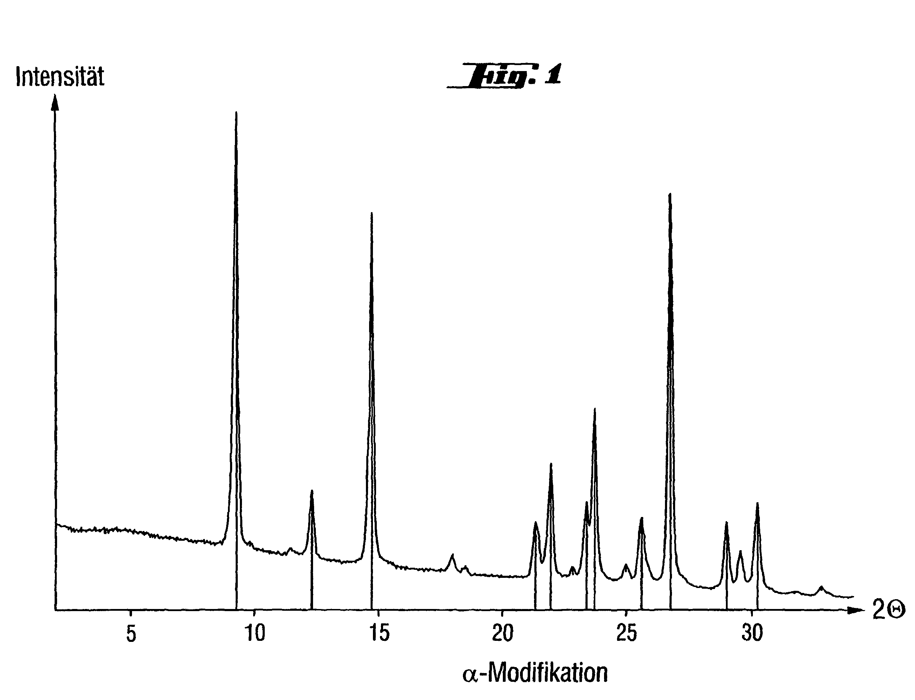

Die einzige bisher bekannte Kristallmodifikation von Thiazin-Indigo, die im folgenden als α-Modifikation bezeichnet wird, weist im Röntgenpulverdiffraktogramm (Cu-K_{α}-Strahlung) folgende charakteristische Reflexe auf (relative Intensitäten in Abhängigkeit vom doppelten Glanzwinkel 2Θ, siehe Fig. 1):

| | | | | | | | | | | | |
|---|---|---|---|---|---|---|---|---|---|---|---|
| 2Θ/° | 9,2 | 12,3 | 14,7 | 21,4 | 22,0 | 23,4 | 23,7 | 25,6 | 26,8 | 29,0 | 30,2 |
| rel. Int. | 100 | 13 | 64 | 8 | 17 | 12 | 36 | 15 | 64 | 11 | 23 |

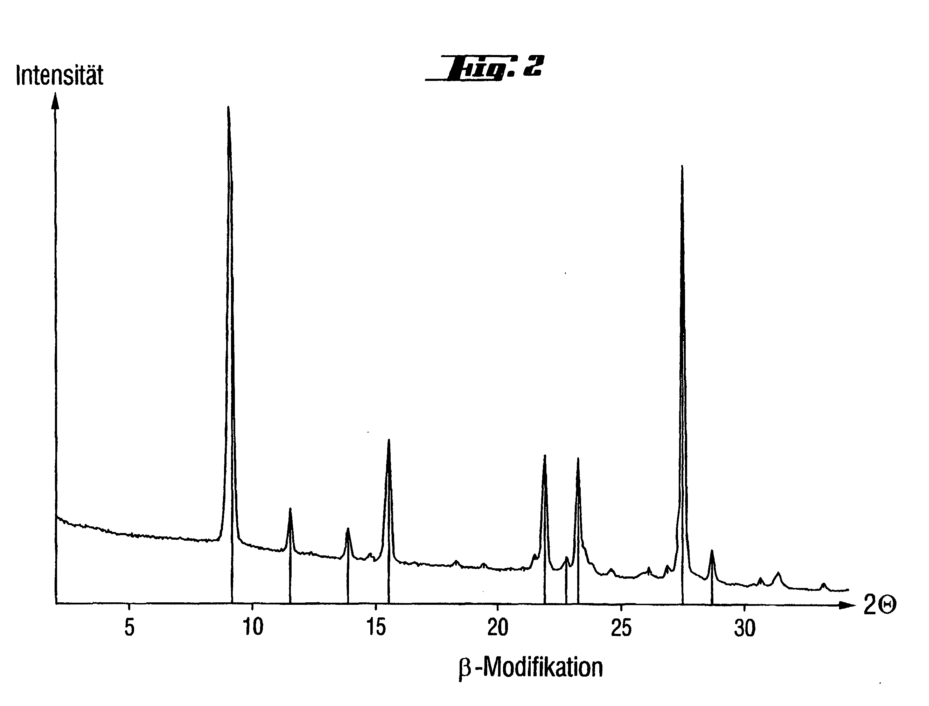

Es wurde nun überraschenderweise eine neue Kristallmodifikation von Thiazin-Indigo der Formel (I) gefunden, die als β-Modifikation bezeichnet wird und durch folgende Linien im Röntgenpulverdiffraktogramm (Cu-K_{α}-Strahlung) charakterisiert ist (relative Intensitäten in Abhängigkeit vom doppelten Glanzwinkel 2Θ, siehe Fig. 2):

| | | | | | | | | |
|---|---|---|---|---|---|---|---|---|
| 2Θ/° | 9,1 | 11,5 | 13,8 | 15,5 | 21,8 | 23,2 | 27,4 | 28,6 |
| rel.Int. | 100 | 14 | 12 | 50 | 25 | 31 | 86 | 11 |

Die erfindungsgemäße β-Modifikation des unsubstituierten Thiazin-Indigos ist schwerlöslich, farbstark und zeichnet sich durch orange Färbungen aus.

Gegenstand der Erfindung ist auch ein Verfahren zur Herstellung der β-Modifikation von Thiazin-Indigo der Formel (I), indem man eine Verbindung der Formel (II) 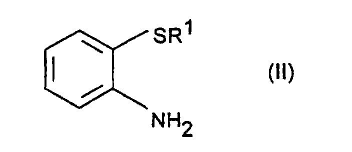 wobei R¹ Wasserstoff oder ein Metalläquivalent, z,B. Na, K, Ca/2, Mg/2, Ba/2, Zn/2 oder Al/3, bedeutet,
mit einer Verbindung der Formel (IIIa) oder (IIIb) 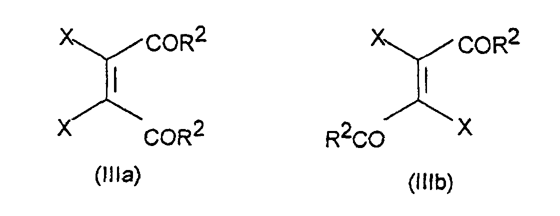 worin
- X: ein Chlor- oder Bromatom und
- R²: Hydroxyl oder Alkoxyl, wie z.B. C₁-C₆-Alkoxyl, oder die beiden
- R²: zusammen Sauerstoff bedeuten,
umsetzt, dadurch gekennzeichnet, daß die Umsetzung in N-Methylformamid, N-Methylacetamid, Dimethylsulfoxid oder in einem polaren, aromatischen Lösemittel, wie z.B. Acetophenon oder Propiophenon, oder in einer Mischung der genannten Lösemittel, durchgeführt wird.

Die Umsetzung der Verbindungen der Formeln (II) mit (IIIa) oder (IIIb) ist aus DE-A-21 51 723 bekannt, jedoch wird in dieser Schrift als Lösemittel Eisessig verwendet, wobei nur die bekannte α-Modifikation entsteht. Es war daher sehr überraschend, daß durch die Verwendung der erfindungsgemäß genannten Lösemittel Thiazin-Indigo in einer unterschiedlichen Kristallmodifikation erhältlich ist. Die Umsetzung kann üblicherweise bei Temperaturen von 0 bis 280°C, vorzugsweise von 20°C bis zum Siedepunkt des Lösemittels, durchgeführt werden, wobei 280°C nicht überschritten werden sollte, um eine Zersetzung des Reaktionsproduktes zu vermeiden.

Die erfindungsgemäße Kristallmodifikation erhält man ebenfalls, wenn man Thiazin-lndigo, welches nicht oder nur teilweise in der β-Modifikation vorliegt, z.B. die α-Modifikation oder eine Mischung aus α- und β-Modifikation, unter bestimmten Bedingungen umkristallisiert oder sublimiert.

Die erfindungsgemäße β-Modifikation wird auch erhalten, wenn Thiazin-Indigo, welches nicht oder nur teilweise in der β-Modifikation vorliegt, z.B. die α-Modifikation oder eine Mischung aus α- und β-Modifikation, in einem organischen Lösemittel, wie z.B. N-Methylformamid, N-Methylacetamid, Acetophenon, Propiophenon, Dimethylsulfoxid, N-Methylpyrrolidon, Chinolin, α-Chlornaphthalin, α-Methylnaphthalin, β-Picolin oder γ-Picolin oder einer Mischung davon zumindest teilweise gelöst, vorzugsweise unter Erhitzen gelöst, und anschließend wieder ausgefällt wird.

Im Falle von Lösemitteln, in denen Thiazin-Indigo schon bei tiefen Temperaturen merklich löslich ist, z.B. in Dimethylsulfoxid, kann das Auflösen auch bei Temperaturen von beispielsweise -20 bis +20°C erfolgen.
Da Thiazin-Indigo in den meisten Lösemitteln in der Wärme besser löslich ist als in der Kälte, geschieht das Auflösen oder partielle Auflösen zweckmäßigerweise bei erhöhter Temperatur, z.B. bei der Siedetemperatur des Lösemittels oder Lösemittelgemisches. Um Zersetzung zu vermeiden, sollte die Temperatur 280°C nicht überschreiten. Die Temperatur, auf die die Lösung, zweckmäßigerweise eine gesättigte Lösung, erhitzt wird, liegt vorzugsweise in einem Bereich zwischen dem Siedepunkt des Lösemittels und einer Temperatur, die 40°C unter diesem Siedepunkt liegt. Die Dauer dieser Lösemittelbehandlung kann 1 Minute bis 24 Stunden, vorzugsweise 5 Minuten bis 3 Stunden, betragen. Um das Thiazin-Indigo in der gewünschten β-Modifikation auszufällen, wird die Temperatur auf einen Wert im Bereich zwischen -20°C und 20°C unterhalb des Siedepunkts des Lösemittels, vorzugsweise zwischen -5°C und +105°C, insbesondere auf 0 bis 40°C, abgesenkt, vorzugsweise im Verlauf von 5 Minuten bis 24 Stunden, insbesondere von 10 Minuten bis 6 Stunden, besonders bevorzugt 30 Minuten bis 4 Stunden.

Die erfindungsgemäße β-Modifikation wird auch erhalten, wenn Thiazin-Indigo, welches nicht oder nur teilweise in der β-Modifikation vorliegt, z.B. die α-Modifikation oder eine Mischung aus α- und β-Modifikation, in der Wärme, vorzugsweise bei 30 bis 200°C, in einem ersten Lösemittel zumindest partiell aufgelöst und durch Zugabe eines zweiten Lösemittels wieder ausgefällt wird. Als erstes Lösemittel eignen sich insbesondere Acetophenon, Chinolin, α-Chlornaphthalin, Dimethylsulfoxid (DMSO), N-Methylformamid, α-Methylnaphthalin, N-Methylpyrrolidon, β-Picolin und γ-Picolin oder eine Mischung davon. Besonders bevorzugt ist DMSO oder ein Gemisch mit DMSO. Zum Ausfällen von gelöstem oder partiell gelöstem Thiazin-Indigo eignen sich alle (zweiten) Lösemittel, in denen Thiazin-Indigo schlechter löslich ist als in dem zum Auflösen verwendeten Lösemittel, bevorzugt unpolare aliphatische oder aromatische Kohlenwasserstoffe, Ether, Ester, Carbonsäuren, Alkohole, Phenole und Wasser, insbesondere Mesitylen, Dichlorbenzole, Trichlorbenzole, Chlomaphthaline, Dimethyldiethylenglykol, Dioxan, Essigsäurebutylester, Malonsäurediethylester, Essigsäure, Methanol, Ethanol, Glykol, Wasser oder eine Mischung davon.

Die erfindungsgemäße β-Modifikation wird ebenfalls erhalten, wenn Thiazin-Indigo, welches nicht oder nur teilweise in der β-Modifikation vorliegt, z.B. die α-Modifikation oder eine Mischung aus α- und β-Modifikation, in Gegenwart einer alkalisch wirkenden Verbindung, z.B. NaOH, KOH oder einem Alkalimetal-Alkoholat, gelöst oder zumindest partiell aufgelöst und beispielsweise durch Zugabe einer sauer wirkenden Verbindung und/oder eines (zweiten) Lösemittels ausgefällt wird. Als erstes Lösemittel eignen sich hierbei polare, organische Lösemittel, z.B. Alkohole, wie t-Amylalkohol, DMSO, Ether, NMP, Picolin, Pyridin und Chlorbenzol.

Das Lösen erfolgt vorzugsweise unter Erhitzen auf 20 bis 200°C. Das Ausfällen erfolgt vorzugsweise durch Zugabe einer sauer wirkenden Verbindung oder durch Zugabe eines zweiten Lösemittels, wie vorstehend definiert.

Das erhaltene Thiazin-Indigo der β-Phase kann in der Wärme oder nach Abkühlen auf Raumtemperatur oder darunter in der üblichen Weise, z.B. durch Abfiltrieren oder durch Verdampfen des Lösemittels, gegebenenfalls unter Anlegen von Vakuum, isoliert werden. Je nach verwendetem Lösemittel ist es zweckmäßig, den Preßkuchen oder den Rückstand mit einer organischen Flüssigkeit, z.B. niederen Alkoholen wie Methanol, Ethanol, Propanol, Isopropanol oder mit Aceton, zu waschen.

Je nach gewünschtem Anwendungsbereich kann es sinnvoll sein, das erhaltene Pigment einer mechanischen Feinverteilung zu unterwerfen. Die Feinverteilung kann durch Naß- oder Trockenmahlung erfolgen. An die Mahlung kann sich ein Lösemittel-Finish anschließen, um das Pigment in eine gebrauchsfähige Form zu überführen.

Die erfindungsgemäße β-Modifikation wird auch erhalten durch Sublimation von Thiazin-Indigo, welches nicht oder nur teilweise in der β-Modifikation vorliegt, z.B. der α-Modifikation oder einer Mischung von α- und β-Modifikation, in einem Temperaturgradienten, z.B. von 300 bis 270°C, insbesondere unter Verwendung von Vakuum.

In Abhängigkeit von den verwendeten Lösemitteln, der Konzentration, der angewandten Temperatur beim Lösen, der Abkühlungsgeschwindigkeit der Lösung und der Gegenwart von Impfkristallen der β-Phase kann die reine β-Phase oder eine Mischung von α- und β-Phase entstehen.

Die reine oder überwiegend reine β-Modifikation entsteht bevorzugt, wenn man von einer Lösung ausgeht, in der bereits Impfkristalle oder Kristallkeime der β-Modifikation vorhanden sind, und wenn man diese Lösung so langsam abkühlt, bzw. ein zweites, schlechter lösendes Lösemittel so langsam zugibt, daß die Übersättigung in einem Bereich gehalten wird, in dem die Kristallwachstumsgeschwindigkeit relativ hoch, die Kristallkeimbildungsgeschwindigkeit jedoch relativ gering ist, so daß die vorhandenen Kristallkeime unter Beibehaltung der Modifikation wachsen. Der Einsatz eines mechanischen Rührers kann von Vorteil sein, da er vorhandene Kristalle der β-Modifikation in viele kleinere Bruchstücke zerschlägt, die dann wieder als Kristallkeime für die β-Modifikation dienen (sogenannte Sekundämukleation).

Wenn die Übersättigung höher ist, z.B. weil die Lösung schneller abgekühlt wird, oder ein zweites Lösemittel schneller zugegeben wird, ist die Kristallkeimbildungsgeschwindigkeit viel höher, so daß spontan viele Kristallkeime der α- und β-Modifikation entstehen können; dabei erhält man bevorzugt Mischungen aus α- und β-Modifikation.

Der Herstellung einer Mischung von α- und β-Modifikation kann von Interesse sein, wenn coloristische Eigenschaften gewünscht werden, die zwischen denen der α- und denen der β-Modifikation liegen, beispielsweise ein bestimmter Orange-Farbton, der zwischen der rot-orangen α-Modifikation und der gelb-orangen β-Modifikation liegt. Andererseits ist es auch möglich, eine Mischung aus α- und β-Modifikation aufzukonzentrieren, um einen höheren β-Anteil oder auch die annähernd reine β-Modifikation zu erhalten, beispielsweise durch Windsichten, fraktionierte Kristallisation oder durch wiederholtes Anwenden von erfindungsgemäßen Verfahrensmaßnahmen, in denen das Entstehen der β-Modifikation begünstigt ist.

Gegenstand der vorliegenden Erfindung ist daher auch eine Thiazin-Indigo-Mischung, die mindestens 10 %, vorzugsweise mindestens 25 %, insbesondere mindestens 50 %, besonders bevorzugt mindestens 75 %, der β-Modifikation von Thiazin-Indigo enthält.

Zur Erleichterung des Modifikationswechsels von α nach β, zur Stabilisierung der β-Modifikation, zur Verbesserung der coloristischen Eigenschaften und/oder zur Erzielung bestimmter coloristischer Effekte können an beliebigen Stellen des Verfahrens Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zusatzstoffe können an jedem Punkt der Synthese oder der verschiedenen Behandlungen (Finish, Umkristallisieren, Sublimieren, Mahlen, Kneten) oder nach den Nachbehandlungen zugegeben werden. Der am besten geeignete Zeitpunkt muß zuvor durch orientierende Versuche ermittelt werden.

Das erfindungsgemäße β-Thiazin-Indigo oder die Mischungen, die die β-Modifikation enthalten, eignen sich zum Pigmentieren von Lacken und Kunststoffen und zur Herstellung von Druckfarben und wäßrigen Pigmentpräparationen.

Die erfindungsgemäße β-Modifikation oder Mischungen von Thiazin-Indigo, die die β-Modifikation enthalten, sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner (Lit: L.B. Schein, "Electrophotography and Development Physics"; Springer Series in Electrophysics 14, Springer Verlag, 2nd Edition, 1992).

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren ist die erfindungsgemäße β-Modifikation oder eine Mischung von Thiazin-Indigo, die die β-Modifikation enthält, geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen (J.F. Hughes, "Electrostatics Powder Coating" Research Studies Press, John Wiley & Sons, 1984).

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung.

So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem ist die erfindungsgemäße β-Modifikation oder eine Mischung von Thiazin-Indigo, die die β-Modifikation enthält, als Farbmittel in Ink-Jet Tinten auf wäßriger und nichtwäßriger Basis sowie in solchen Tinten, die nach dem hot-melt-Verfahren arbeiten, geeignet.

Weiterhin sind die erfindungsgemäßen Farbstoffsalze auch geeignet als Farbmittel für Farbfilter sowohl für die additive wie subtraktive Farberzeugung (s. beispielsweise P. Gregory, "Topics in Applied Chemistry: High Technology Applications of Organic Colorants", Plenum Press, New York, 1991, S. 15 - 25).

In den folgenden Beispielen sind Teile und Prozentangaben auf das Gewicht bezogen. Die Bestimmung der Kristallmodifikation der erhaltenen Produkte erfolgt durch Röntgenpulverdiffraktometrie (Cu-K_{α}-Strahlung). Das eingesetzte Thiazin-Indigo liegt jeweils in der α-Modifikation vor, sofern nicht anders vermerkt.

### Beispiele

### Beispiel 1: Umkristallisation aus N-Methylformamid

Man erhitzt N-Methylformamid bis zum Sieden und trägt soviel Thiazin-Indigo ein, daß die Lösung gesättigt, aber nicht übersättigt ist. Anschließend kühlt man die Lösung innerhalb von 20 Minuten auf Raumtemperatur ab, filtriert das ausgefallene Pigment ab und trocknet es bei 95°C. Man erhält die erfindungsgemäße β-Modifikation von Thiazin-Indigo, die über ihr Röntgenbeugungsdiagramm nachgewiesen wird (siehe Fig. 2).

### Beispiel 2: Umkristallisation aus Acetophenon

Verfahrensweise wie in Beispiel 1, aber mit Acetophenon statt N-Methylformamid. Das Röntgenbeugungsdiagramm entspricht dem von Beispiel 1.

### Beispiel 3: Umkristallisation aus DMSO

Verfahrensweise wie in Beispiel 1, aber mit Dimethylsulfoxid statt N-Methylformamid. Das Röntgenbeugungsdiagramm entspricht dem von Beispiel 1.

### Beispiel 4: Umkristallisation aus NMP

Verfahrensweise wie in Beispiel 1, aber mit N-Methylpyrrolidon statt N-Methylformamid. Man erhält ein Gemisch aus α- und β-Modifikation mit etwa 40 % β-Anteil.

### Beispiel 5: Umkristallisation aus DMSO durch Ausfällen mit Wasser

Man erhitzt 50 Teile Dimethylsulfoxid bis zum Sieden und trägt soviel Thiazin-Indigo ein, daß die Lösung gesättigt, aber nicht übersättigt ist. Man gießt die heiße Lösung in 100 Teile Wasser (etwa 20°C) und filtriert ab. Man erhält ein Gemisch aus α- und β-Modifikation mit etwa 25 % β-Anteil.

### Beispiel 6: Umkristallisation aus DMSO durch Ausfällen mit Methanol

Verfahrensweise wie in Beispiel 5, aber mit Methanol statt Wasser. Man erhält ebenfalls ein Gemisch aus α- und β-Modifikation mit etwa 40 % β-Anteil.

### Beispiel 7: Umkristallisation aus alkalischem DMSO durch Ausfällen mit Methanol

In ein Gemisch aus 110 Teilen Dimethylsulfoxid, 16 Teilen Wasser und 4,7 Teilen KOH (fest) werden bei 40°C 13,05 Teile Thiazin-Indigo eingerührt. Man erwärmt auf 75°C und hält diese Temperatur für 30 Minuten. Die heiße Lösung wird über ein Papierfilter in 400 Teile Methanol der Temperatur 25°C gegossen. Anschließend erhitzt man noch 2 Stunden auf 68°C, filtriert ab und wäscht mit 200 Teilen Methanol und 300 Teilen Wasser. Das Pigment wird bei 90°C getrocknet. Ausbeute: 12,2 Teile (93 %) Thiazin-Indigo in der β-Modifikation.

### Beispiel 8: Umkristallisation aus alkalischem Alkohol durch Ausfällen mit H₂O

In ein Gemisch aus 450 Teilen tert.-Amylalkohol und 112 Teilen Kalium-tert.-butanolat werden bei 95°C 66 Teile Thiazin-Indigo eingerührt. Man rührt noch 1/2 Stunde bei 92°C nach. Anschließend gibt man im Verlauf von 30 Minuten langsam 100 Teile Wasser hinzu und rührt noch 15 Minuten bei 85°C nach. Im Verlauf von 2 Stunden destilliert man den tert.-Amylalkohol ab, wobei man in den ersten 90 Minuten weitere 250 Teile Wasser langsam hinzugibt. Man filtriert heiß ab, wäscht mit heißem Wasser und trocknet das Pigment bei 90°C. Man erhält das Thiazin-Indigo in der β-Modifikation.

### Beispiel 9: Synthese in Acetophenon

In ein Gemisch aus 200 Teilen Acetophenon, 20 Teilen Eisessig und 20,9 Teilen 2,3-Dichlormaleinsäureanhydrid werden innerhalb einer Stunde bei 15 bis 20°C 39,2 g Zink-(2-aminothiophenolat) eingetragen und eine Stunde bei 18 bis 20°C nachgerührt. Im Verlauf von 7,5 Stunden wird auf 140°C erwärmt, wobei bei Erreichen einer Temperatur von 80°C 150 Teile Acetophenon zugesetzt werden. Man erhitzt weiter bis auf 180°C, filtriert heiß ab und wäscht den Rückstand mit 100 Teilen Acetophenon, anschließend mit Ethanol und Wasser. Man erhält ein Gemisch aus α- und β-Phase mit etwa 40 % β-Anteil.

### Beispiel 10: Sublimation

In einem Glasrohr mit einem Temperaturgradienten wird Thiazin-Indigo bei einem Druck von 100 Pa (10⁻³ bar) auf 300°C erhitzt. Das Thiazin-Indigo sublimiert und scheidet sich nach einer Sublimationsstrecke von 3 cm bei 270°C wieder ab. Man erhält das Thiazin-Indigo in der β-Modifikation.

## Patentansprüche

1. Thiazin-Indigo der Formel (I) 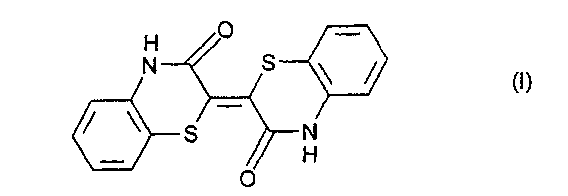 in der β-Modifikation, **gekennzeichnet durch** folgende charakteristischen Reflexe im Röntgenpulverdiffraktogramm, gemessen mit Cu-K_{α}-Strahlung:
| | | | | | | | | |
|---|---|---|---|---|---|---|---|---|
| 2Θ/° | 9,1 | 11,5 | 13,8 | 15,5 | 21,8 | 23,2 | 27,4 | 28,6 |
| relative Intensität | 100 | 14 | 12 | 50 | 25 | 31 | 86 | 11 |

2. Verfahren zur Herstellung von Thiazin-Indigo der Formel (I) in der β-Modifikation gemäß Anspruch 1, **dadurch gekennzeichnet, daß** man eine Verbindung der Formel (II) 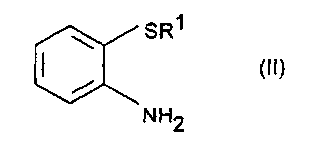 wobei R¹ Wasserstoff oder ein Metalläquivalent bedeutet,
mit einer Verbindung der Formel (IIIa) oder (IIIb) 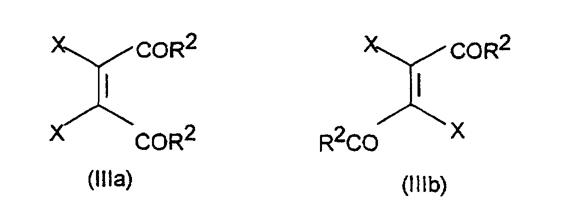 worin
X ein Chlor- oder Bromatom und
R² Hydroxyl oder Alkoxyl oder die beiden
R² zusammen Sauerstoff bedeuten,
umsetzt, **dadurch gekennzeichnet, daß** die Umsetzung in N-Methylformamid, N-Methylacetamid, Dimethylsulfoxid oder in einem polaren, aromatischen Lösemittel, vorzugsweise Acetophenon oder Propiophenon, oder in einer Mischung der genannten Lösemittel durchgeführt wird.

3. Verfahren zur Herstellung von Thiazin-Indigo der Formel (I) in der β-Modifikation gemäß Anspruch 1, **dadurch gekennzeichnet, daß** Thiazin-Indigo der Formel (I), welches nicht oder nur teilweise in der β-Modifikation vorliegt, in einem organischen Lösemittel zumindest teilweise gelöst, vorzugsweise unter Erhitzen gelöst, und anschließend wieder ausgefällt wird.

4. Verfahren nach Anspruch 3, **dadurch gekennzeichnet, daß** das organische Lösemittel N-Methylformamid, N-Methylacetamid, Acetophenon, Propiophenon, Dimethylsulfoxid, N-Methylpyrrolidon, Chinolin, α-Chlornaphthalin, α-Methylnaphthalin, β-Picolin oder γ-Picolin ist.

5. Verfahren nach Anspruch 3 oder 4, **dadurch gekennzeichnet, daß** die Lösung auf eine Temperatur erhitzt wird, die zwischen dem Siedepunkt des Lösemittels und 40°C unter diesem Siedepunkt liegt.

6. Verfahren nach mindestens einem der Ansprüche 3 bis 5, **dadurch gekennzeichnet, daß** zum Ausfällen des Thiazin-Indigos die Lösung auf eine Temperatur zwischen -20°C und 20°C unterhalb des Siedepunktes des Lösemittels, vorzugsweise zwischen -5°C und +105°C, insbesondere zwischen 0 und 40°C, gesenkt wird.

7. Verfahren nach Anspruch 6, **dadurch gekennzeichnet, daß** die Temperaturabsenkung im Verlauf von 5 Minuten bis 24 Stunden, vorzugsweise von 10 Minuten bis 6 Stunden, vorgenommen wird.

8. Verfahren nach mindestens einem der Ansprüche 3 bis 7, **dadurch gekennzeichnet, daß** das Ausfällen durch Zugabe eines Lösemittels vorgenommen wird, in dem sich Thiazin-Indigo schlechter löst als in demjenigen, in dem es gelöst wurde.

9. Verfahren zur Herstellung von Thiazin-Indigo der Formel (I) in der β-Modifikation gemäß Anspruch 1, **dadurch gekennzeichnet, daß** Thiazin-Indigo, welches nicht oder nur teilweise in der β-Modifikation vorliegt, in Gegenwart einer alkalisch wirkenden Verbindung gelöst oder zumindest teilweise gelöst und anschließend wieder ausgefällt wird.

10. Verfahren zur Herstellung von Thiazin-Indigo der Formel (I) in der β-Modifikation gemäß Anspruch 1, **dadurch gekennzeichnet, daß** Thiazin-Indigo, welches nicht oder nur teilweise in der β-Modifikation vorliegt, in einem Temperaturgradienten sublimiert wird.

11. Thiazin-Indigo-Mischung, enthaltend mindestens 10 %, vorzugsweise mindestens 25 %, insbesondere mindestens 50 %, besonders bevorzugt mindestens 75 %, der β-Modifikation gemäß Anspruch 1.

12. Verwendung von Thiazin-Indigo gemäß Anspruch 1 oder 11 als Farbmittel zum Pigmentieren von Lacken, Kunststoffen, Druckfarben, elektrophotographischen Tonern und Entwicklern, Pulverlacken oder Ink-Jet-Tinten.

## Claims

1. Thiazine-indigo of the formula (I) 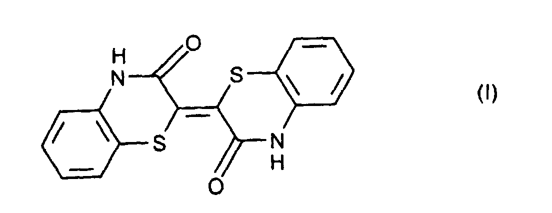 in the β-modification, which comprises the following characteristic reflections in the X-ray powder diffraction pattern, measured using Cu-K_{α} radiation:
| | | | | | | | | |
|---|---|---|---|---|---|---|---|---|
| 2Θ/°: | 9.1 | 11.5 | 13.8 | 15.5 | 21.8 | 23.2 | 27.4 | 28.6 |
| relative intensity: | 100 | 14 | 12 | 50 | 25 | 31 | 86 | 11 |

2. A process for the preparation of thiazine-indigo of the formula (I) in the β-modification as claimed in claim 1, wherein a compound of the formula (II) 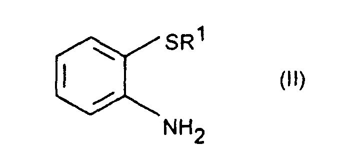 in which R¹ is hydrogen or one equivalent of a metal,
is reacted with a compound of the formula (IIIa) or (IIIb) 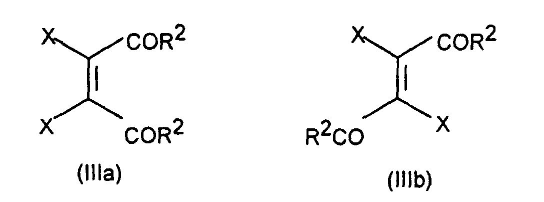 in which
X is a chlorine or bromine atom and
R² is hydroxyl or alkoxy or the two
R² together are oxygen,
and wherein the reaction is carried out in N-methylformamide, N-methylacetamide or dimethyl sulfoxide or in a polar, aromatic solvent, preferably acetophenone or propiophenone, or in a mixture of the stated solvents.

3. The process for the preparation of thiazine-indigo of the formula (I) in the β-modification as claimed in claim 1, wherein thiazine-indigo of the formula (I) which is not present in the β-modification or is only partly present in the β-modification is at least partially dissolved, preferably dissolved with heating, in an organic solvent and then reprecipitated.

4. The process as claimed in claim 3, wherein the organic solvent is N-methylformamide, N-methylacetamide, acetophenone, propiophenone, dimethyl sulfoxide, N-methylpyrrolidone, quinoline, α-chloronaphthalene, α-methylnaphthalene, β-picoline or γ-picoline.

5. The process as claimed in claim 3 or 4, wherein the solution is heated to a temperature which is between the boiling point of the solvent and 40°C below this boiling point.

6. The process as claimed in at least one of claims 3 to 5, wherein, for precipitating the thiazine-indigo, the solution is cooled to a temperature of between -20°C and 20°C below the boiling point of the solvent, preferably between -5°C and +105°C, in particular between 0 and 40°C.

7. The process as claimed in claim 6, wherein the temperature reduction is effected in the course of from 5 minutes to 24 hours, preferably from 10 minutes to 6 hours.

8. The process as claimed in at least one of claims 3 to 7, wherein the precipitation is effected by adding a solvent in which thiazine-indigo is more poorly soluble than in that in which it was dissolved.

9. A process for the preparation of thiazine-indigo of the formula (I) in the β-modification as claimed in claim 1, wherein thiazine-indigo which is not present in the β-modification or is only partly present in the β-modification is dissolved or at least partially dissolved in the presence of an alkaline compound and reprecipitated.

10. A process for the preparation of thiazine-indigo of the formula (I) in the β-modification as claimed in claim 1, wherein thiazine-indigo which is not present in the β-modification or is only partly present in the β-modification is sublimed in a temperature gradient.

11. A thiazine-indigo mixture containing at least 10%, preferably at least 25%, in particular at least 50%, particularly preferably at least 75%, of the β-modification as claimed in claim 1.

12. The use of thiazine-indigo as claimed in claim 1 or 11 as a colorant for pigmenting coatings, plastics, printing inks, electrophotographic toners and developers, powder coatings or inkjet inks.

## Revendications

1. Thiazine-indigo de formule (I) 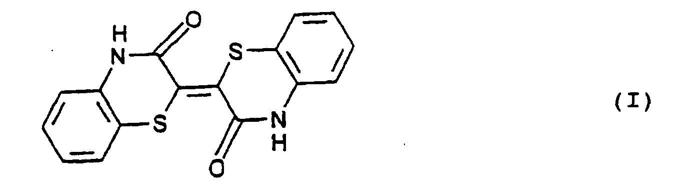 en modification β, **caractérisée par** des réflexions caractéristiques dans le diagramme de diffraction des rayons X, mesurées avec le rayonnement Cu-K_{α} :
| | | | | | | | | |
|---|---|---|---|---|---|---|---|---|
| 2θ/° | 9,1 | 11,5 | 13,8 | 15,5 | 21,8 | 23,2 | 27,4 | 28,6 |
| int. rel. | 100 | 14 | 12 | 50 | 25 | 31 | 86 | 11 |

2. Procédé de préparation de thiazine-indigo de formule (I) en modification β selon la revendication 1, **caractérisé en ce qu'**on fait réagir un composé de formule (II) 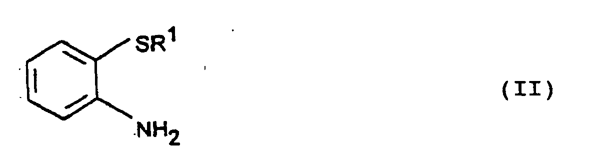 où
R¹ représente un atome d'hydrogène ou un équivalent métallique,
avec un composé de formule (IIIa) ou (IIIb) 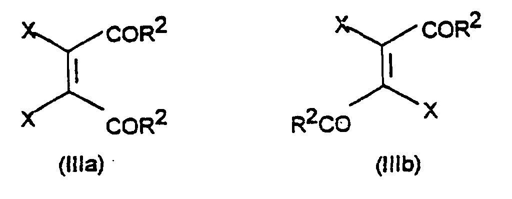 où
X représente un atome de chlore ou de brome et
R² représente un groupe hydroxyle ou alkoxyle ou les deux
R² ensemble représentent un atome d'oxygène,
**caractérisé en ce qu'**on met en oeuvre la réaction dans le N-méthylformamide, le N-méthylacétamide, le diméthylsulfoxyde ou dans un solvant polaire, aromatique, comme par exemple, l'acétophénone et la propiophénone, ou dans un mélange des solvants précités.

3. Procédé de préparation de thiazine-indigo de formule I sous forme de modification β selon la revendication 1, **caractérisé en ce qu'**on dissout, au moins partiellement, le thiazine-indigo qui ne se présente pas ou ou seulement en partie sous forme de modification β, dans un solvant organique, de préférence en chauffant, et ensuite on précipite à nouveau.

4. Procédé selon la revendication 3, **caractérisé en ce que** le solvant organique est le N-méthylformamide, le N-méthylacétamide, l'acétophénone, la propiophénone, le diméthylsulfoxyde, la N-méthylpyrrolidone, la quinoléine, l'α-chloronaphtalène, l'α-méthylnaphtalène, la β-picoline ou la γ-picoline.

5. Procédé selon la revendication 3 ou 4, **caractérisé en ce qu'**on chauffe la solution à une comprise entre le point d'ébullition du solvant et une température de 40°C inférieure à ce point d'ébullition.

6. Procédé selon au moins l'une des revendications 3 à 5, **caractérisé en ce que**, pour précipiter le thiazine-indigo, on réduit la température de la solution a une valeur comprise entre -20°C et 20°C au-dessous du point d'ébullition du solvant.

7. Procédé selon la revendication 6, **caractérisé en ce qu'**on réduit la température en l'espace de 5 minutes à 24 heures, de préférence de 10 minutes à 6 heures.

8. Procédé selon au moins l'une des revendications 3 à 7, **caractérisé en ce que** la précipitation est réalisée par addition d'un solvant dans lequel la solubilité du thiazine-indigo est plus faible que dans celui, dans lequel est dissous.

9. Procédé pour la préparation de thiazine-indigo de formule (I) sous forme de modification β selon la revendication 1, **caractérisé en ce que** le thiazine-indigo qui ne se présente pas ou seulement en partie sous forme de modification β, est dissous ou au moins partiellement dissous en présence d'un composé alcalin et ensuite précipité à nouveau.

10. Procédé pour la préparation de thiazine-indigo de formule (I) sous forme de modification β selon la revendication 1, **caractérisé en ce qu'**on sublime dans un gradient de température le thiazine-indigo qui ne se présente pas ou seulement en partie sous forme de modification β.

11. Mélange de thiazine-indigo, contenant au moins 10 %, de préférence au moins 25 %, de manière particulière au moins 50 %, de manière particulièrement préférée au moins 75 %, de la modification β selon la revendication 1.

12. Utilisation de thiazine-indigo selon la revendication 1 ou 11 en tant que colorant pour la pigmentation de vernis, de matières plastiques, d'encres d'imprimerie, dé toners et révélateur électrophotographiques, de vernis en poudre ou d'encres à jet.
